# EUROPEAN PATENT SPECIFICATION

(11) **EP 1 799 922 B1**
(45) Date of publication and mention of the grant of the patent: **15.07.2015**
(21) Application number: 05799700.9
(22) Date of filing: 23.09.2005
(51) Int. Cl.: E04B 1/00, B32B 38/00, B32B 37/00

(54) **LAMINATED BUILDING MATERIALS**
LAMINIERTE BAUSTOFFE
MATERIAUX DE CONSTRUCTION LAMINES

(30) Priority: 23.09.2004 US 947186 P
(43) Date of publication of application: 27.06.2007
(73) Proprietor: SAINT-GOBAIN ISOVER, 92400 Courbevoie (FR)
(72) Inventor: TOAS, Murray, S., Norristown, PA 19401 (US); HARTZELL, Bruce, Mickleton, NJ 08056 (US); DUNCAN, Richard, S., Royersford, PA 19468 (US); YANG, Alain, Villanova, PA 19085 (US); GATLAND, Stanley, Downingtown, PA 19335 (US); NILSSON, Eric, Exton, PA 19341 (US); SINGER, Glenn, J., West Chester, PA 19380 (US)
(74) Representative: Teyssedre, Laurent
(86) International application number: PCT/US2005/033912
(87) International publication number: WO 2006/034381

(56) References cited:
- WO-A1-94/29540
- US-A1- 2004 103 608
- US-A1- 2004 103 608
- US-A1- 2004 123 539
- US-A1- 2004 123 539
- US-A1- 2005 153 612
- US-B2- 6 808 772
- US-B2- 6 808 772

## Description

### BACKGROUND OF THE INVENTION

### FIELD OF THE INVENTION

The present invention relates to a laminated article which includes a building material adhered with an adhesive to a water vapor retarder film having a permeance dependent on the ambient humidity adhered to the building material and a method of manufacturing the same.

### DESCRIPTION OF THE BACKGROUND

Building materials, such as fiber insulation batts and fiber insulation slabs attached to a facing material are known. For example, U.S. patent no. 5,545,279 describes the manufacture of an insulation where a fiber insulation pack and a polymer film are moved along a longitudinal path and adhered to each other with a pressure sensitive adhesive.

WO 94/29540 discloses a mineral fiber insulation batt having a polymeric facing adhered to at least one of its opposed side surfaces. The polymeric facing is made of polyethylene or polypropylene and is either impermeable to water vapor or, when perforated, permeable to water vapor. The facing is adhered to the batt by means of an adhesive which is applied at a rate of about 0.2 g per square foot.

US 2004/0123539 is drawn to an insulation assembly having a facing sheet adhered thereto by means of an adhesive layer. The facing may be used as a water vapor retarder or barrier. There is no indication about the facing being a smart vapor retarder the permeability of which depends on the relative humidity.

In many instances of manufacture, the facing materials used are kraft paper and other polymeric materials to provide both support for the underlying fibers and to provide a water and/or water vapor retarder. For example, WO96/33321 describes the attachment of a vapor retarder, such as polyamide films, to insulation or other building materials such as gypsum board, particle board, etc. This vapor retarder imparts a water vapor diffusion resistance, permeance and/or transmission which depend on the ambient humidity.

The present invention relates to an improved method of manufacturing a laminated article, such as a laminated building material which can be performed at production speeds and which retains benefits of the permeance characteristics of the film component.

### SUMMARY OF THE INVENTION

The present invention provides a method of manufacturing a laminated article, comprising providing an adhesive to a film having permeance of up to about 1.73 perms as determined according to the dessicant method of ASTM E 96 Standard Test Methods for Water Vapor Transmission of Materials Method A at a mean Relative Humidity (RH) percentage of 25 and a permeance of not less than about 3.45 perms as determined by the water method of ASTM E 96 Method B at a mean Relative Humidity (RH) percentage of 75, wherein the adhesive is provided in an amount of about 0. to about 1.5 g per lineal 305 mm (foot) of the film based on a 381 mm (15 inch) application width; and contacting the film to at least one surface of a building material.

The present invention also provides a laminated article comprising at least one film component having permeance of up to about 1.73 perms as determined according to the dessicant method of ASTM E 96 Method A at a mean RH percentage of 25 and a permeance of not less than about 3.45 perms as determined by the water method of ASTM E 96 Method B at a mean RH percentage of 75; at least one building material component; and an adhesive which adheres the at least one film component and the at least one building material wherein the adhesive is present in an amount of about 0.4 to about 1.5 g (dry weight)per lineal 305 mm (foot) of the film based on a 381 mm (15 inch) application width.

In another embodiment, the film provided to the building material retains at least 50% of its water vapor diffusion, permeance and/or transmission characteristics defined by permeance of up to about 1.73 perms as determined according to the dessicant method of ASTM E 96 Method A at a mean RH percentage of 25 and a permeance of not less than about 3.45 perms as determined by the water method of ASTM E 96 Method B at a mean RH percentage of 75.

In another embodiment, the film provided to the building material retains at least 50% of its water vapor diffusion, permeance and/or transmission characteristics defined by permeance of up to about 1 perm as determined according to the dessicant method of ASTM E 96 Method A at a mean RH percentage of 25 and a permeance of not less than about 7 perms as determined by the water method of ASTM E 96 Method B at a mean RH percentage of 75.

The present invention also provides a vapor retarder to a structure by installing the laminated article.

The present invention also provides a method of constructing and/or renovating a structure using the laminated article and building structures, such as a roof, wall, and/or floor with the laminated article.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1: (A) is a diagrammatic elevation view showing one embodiment of the method and apparatus for manufacturing a laminated article according to the present invention. (B) is a diagrammatic view showing one embodiment of the pattern of adhesive application to the water vapor retarder film.
FIG. 2: (A) is a diagrammatic elevation view showing another embodiment of the method and apparatus, including optional components, for manufacturing an laminated article according to the present invention. (B) is a diagrammatic view showing another embodiment of the vapor retarder film during the manufacturing process according to the invention.
FIG. 3 is a diagrammatic elevation view showing another embodiment of the method and apparatus for manufacturing a laminated article according to the present invention.
FIG. 4 is a diagrammatic elevation view showing another embodiment of the method and apparatus for manufacturing a laminated article according to the present invention.
FIG. 5 is a diagrammatic elevation view showing another embodiment of the method and apparatus for manufacturing a laminated article according to the present invention.
FIG. 6A is a diagrammatic elevation view showing another embodiment of the method and apparatus for manufacturing a laminated article according to the present invention. FIG. 6B is an example of a pattern of adhesive applied to the film during the manufacture of the laminated article according to the present invention.

### DETAILED DESCRIPTION OF THE INVENTION

Referring now to the drawings, wherein like reference numerals designate identical or corresponding parts throughout the several views.

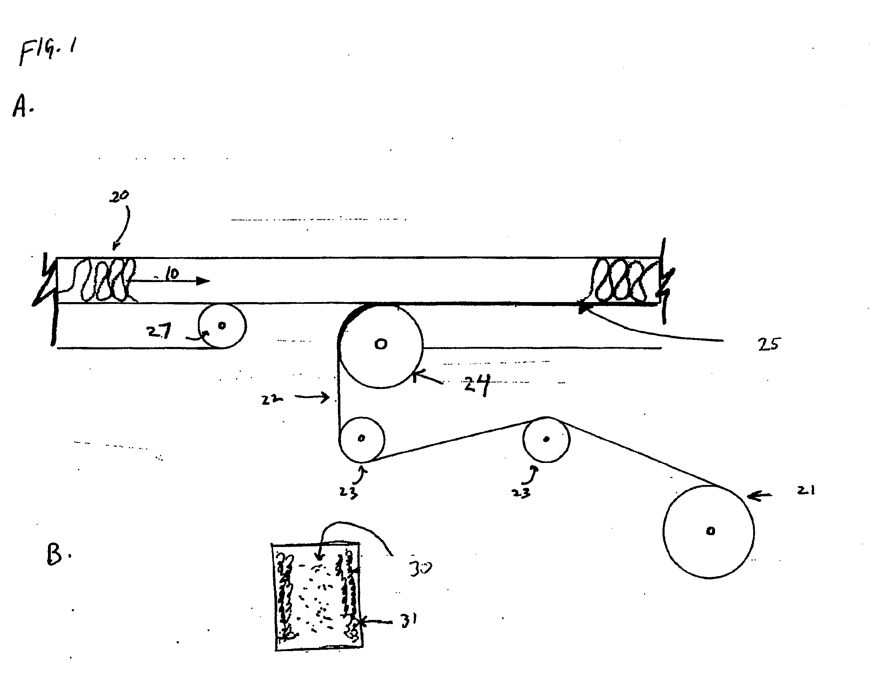

Referring to FIG. 1A, a building material 20 is fed through the process by a conveyer 27 in a predetermined linear path **10.** The water vapor retarder film is provided on a roll **21** and also fed into the adhesion process via rollers **23.** The thermoplastic, hot melt polymer adhesive is applied by a sprayer **22** and the film coated with adhesive is joined with the building material to form a laminated article **25.** In one embodiment, the roller **24** can be a heated roller to provide additional adhesive strength. In one aspect, the roller provides heat in an amount sufficient to keep the adhesive soft, **and** increase the bonding strength between the film and the building material. For example, for polypropylene-based hot melt adhesives, the roller is heated to at least about 177°C (350°F). Variations in heating temperature can be adjusted depending on the adhesive used, the bonding strength required, and the vapor retarder film used.

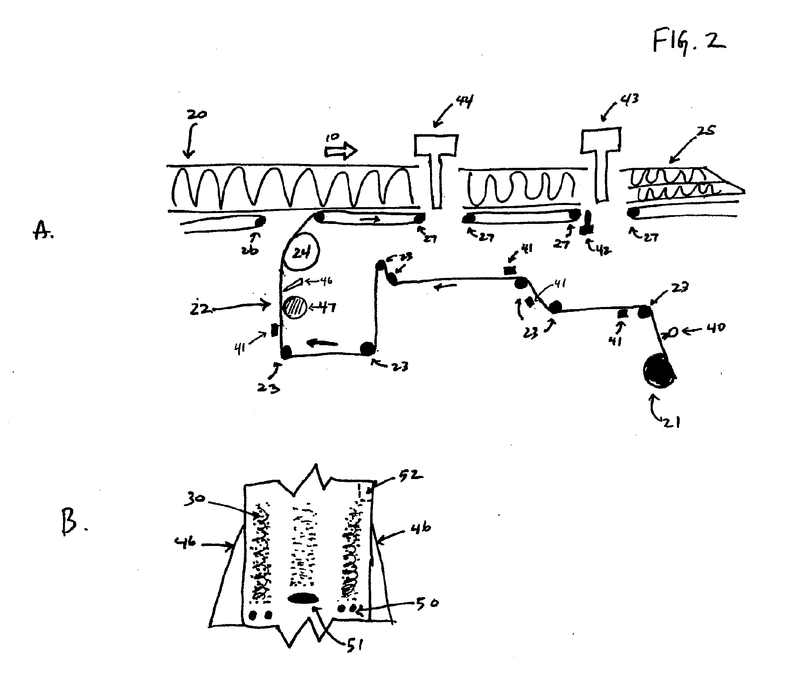

Referring to FIG. 2A, a building material **20** is fed through the process by a conveyor **26** in a predetermined linear path **10.** The water vapor retarder film is provided on a roll **21** and also fed into the adhesion process via rollers **23.** The building material and the laminated article can be moved along the production path via a series of optional conveyers **27.** The adhesive is applied by a sprayer **22** and the film coated with adhesive is joined with the building material to form a laminated article **25.** In one embodiment, the spraying device, e.g., nozzles, are in a horizontal line relative to the film. As above, the roller **24** can be heated to provide additional adhesive strength. In another embodiment depicted in FIG. 2A, a bowed roller **47** can be included in the area of the process where the adhesive is applied to the film. In a preferred embodiment, the bowed roller is above the area where the adhesive is applied.

In another embodiment, at least one static neutralizing bar **41** and/or static neutralizing device **42** can be provided to reduce static on the vapor retarder film and/or the laminated article.

In another embodiment, a cutting device **44** such as a chopper can be included when the building material is an insulation roll or batt. In addition, a folding device **43** can also be included such as a batt folder when the building material is an insulation batt. In one aspect of this embodiment, the laminated article **25** is a folded laminated article.

In one aspect of the invention, the film is provided with a printed pattern which can be provided on the roll **21** or be applied during the manufacturing process of the present invention via a printing device **40** such as an ink-jet print head.

In another aspect of the invention, stapling tabs **52** (FIG. 2B) may be provided via tab formation bars **46.**

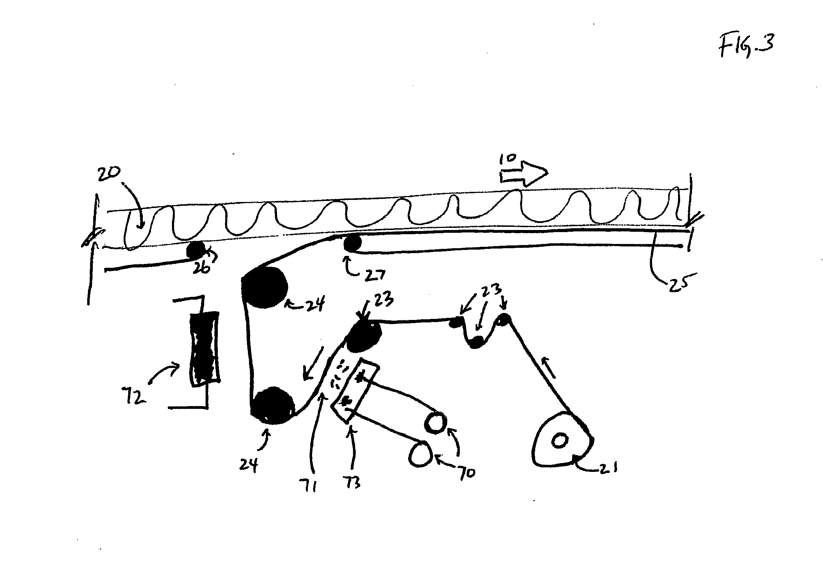

Referring to FIG. 3, a building material **20** is fed through the process by converyers **26** in a predetermined linear path **10.** The vapor retarder film is provided on a roll **21** and fed into the adhesion process via tension rollers **23.** The building material and the laminated article can be moved along the production path via conveyers **26 and 27.** Spools of thermoplastic roving **70** can be provided and chopped in a roving chopper **73.** The chopped thermoplastic fibers **71** are attracted to the film by electrostatic attraction. The film with the thermoplastic fibers can be heated/preheated on a heated roller(s) **24** and/or the thermoplastic fibers are melted with an infrared heater **72** (such as that manufactured by Glenro Corporation) and contacted with the building material **20** to form a laminated article **25.** When the chopped fibers are melted or at least partially melted, the fibers upon cooling form a bond between the film and the building material. In an alternative embodiment, the chopped fibers are introduced into the process, i.e., attracted to the film, after the first roll **24** and preferably between the first roll **24** and heating element **72.**

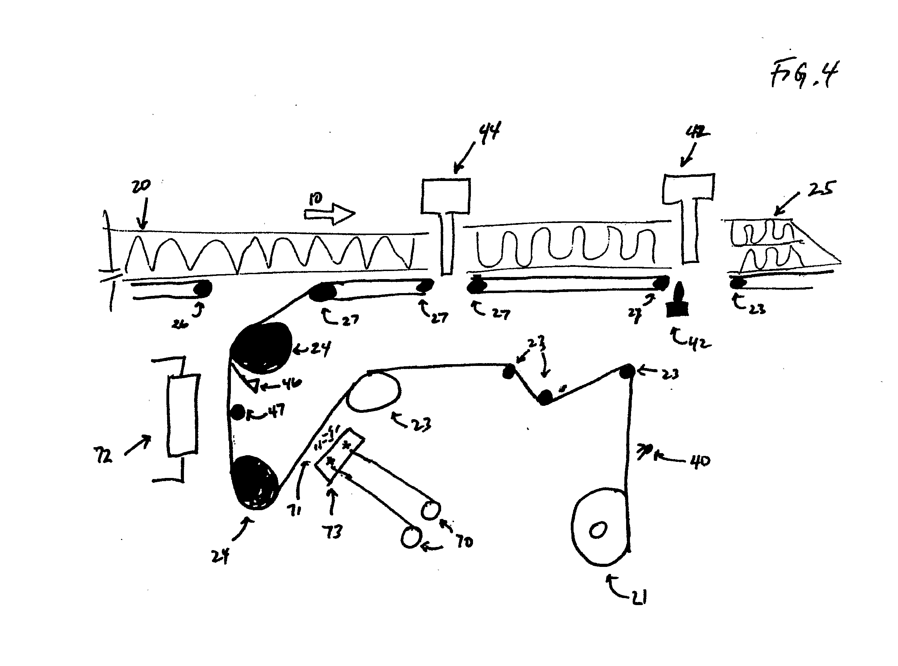

Referring to FIG. 4, a building material **20** is fed through the process by conveyors **26** and **27** in a predetermined linear path **10.** The vapor retarder film is provided on a roll **21** and also fed into the adhesion process via tension rollers **23.** The building material and the laminated article can be moved along the production path via conveyors **26** and **27** (and conveyors). Spools of thermoplastic roving **70** can be provided and chopped in a roving chopper **73.** The chopped thermoplastic fibers **71** are attracted to the film by electrostatic attraction. The chopped fibers are introduced into the process, i.e., attracted to the film, after the last tensioning roll **23** and before the first heated roll **24.** The film is fed through the apparatus via rollers **23** and the film with the thermoplastic fibers are heated/preheated on a heated roller(s) **24** and /or the thermoplastic fibers are melted with an infrared heater **72** and contacted with the building material **20** to form a laminated article **25.**

In another embodiment, a bowed roller **47** can be included in the area of the process of heating element **72.** In a preferred embodiment, the bowed roller **47** is above the area where the adhesive is applied.

In another embodiment, a cutting device **44** such as a chopper when the building material is an insulation batt can be included. In addition, a folding device **43** can also be included such as a batt folder when the building material is an insulation batt.

In one aspect of the invention, the film is provided with a printed pattern which can be provided on the roll **23** or be applied during the manufacturing process of the present invention via a printing device **40** such as an ink-jet print head.

In another aspect of the process, stapling tabs are formed in the vapor retarder film which can be approximately 32 mm (1-1/4") wide folded away from the lamination surface and may be provided via tab formation bars **46.**

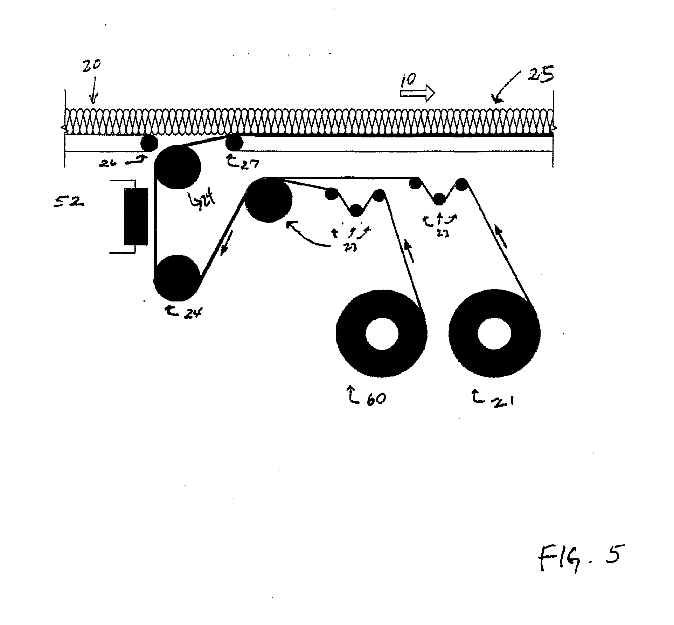

Referring to FIG.5, an alternative process for laminating the film component to the building material is depicted whereby the film is provided on a roll **21** and a roll **60** of a non-woven veil of thermoplastic fibers is also provided

The film and the non-woven veil are fed through the process via tension rollers **23.** After the non-woven veil and the film have contacted, they may be heated via roller(s) **24**and/or heated via heating element **52** (such as an infrared heater) to melt the thermoplastic veil which mediates adhesion to building material **20** thereby forming a laminated article **25.**

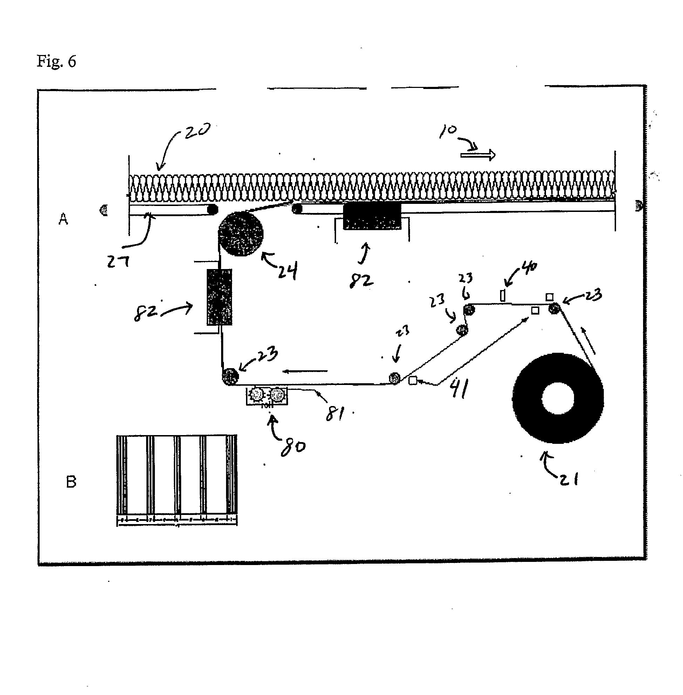

Referring to FIG.6A, an alternative process for laminating the film component to the building material is depicted whereby a building material **20** is fed through the process by a conveyer **27** in a predetermined linear path **27.** The water vapor retarder film is provided on a roll **21** and fed through the process via rollers **23.** In one embodiment, a print head **40** can be used to apply a printed pattern onto the film. Static reduction bars **41** may also be employed. Adhesive, for example, water based adhesives can be provided in stripes **81** which are applied to the film through a roll coater **80.** A heater **82** can be included before adhering the film to the building material to remove excess moisture. A heater **82** may also be provided after the film and building material are brought into contact with each other. In one embodiment, the heat applied to the film by this/these heater(s) is about 104 to 177°C (220 to 350°F). Preferably, a heated roller **24,** which can be heated to a temperature of about 66 to 160°C (150 to 320°F) to assist in drying the adhesive can be positioned just prior to the application of the adhesive coated film with the building material, such as a fiber glass mat, for example.

In one embodiment, the roll coater **80** can be adjusted to permit the flow of the adhesive such that about 0.7 to 2.6 grams (wet weight) and 0.35 to 1.3 grams (dry weight) of adhesive are provided per square foot of film. In another embodiment, the adhesive can be applied in a manner such that approximately 60 to approximately 70% of the film is not coated with adhesive.

Referring to FIG. 6B, patterns of adhesive that can be provided by the roll coated **80** in FIG. 6A is shown whereby various thicknesses of strips of adhesive can be applied. For example, the adhesive can be provided in 32 mm (1.25 inch) wide strips or 19 mm (0.75 inch) wide stripes with between 51 or 63.5 mm (2 or 2.5 inches) between each set of strips. Combinations of these strips and spacing of the adhesive strips can be employed.

The film component of the laminated article has a water vapor diffusion resistance, permeance, or transmission which is dependent on the ambient humidity and which has sufficient tensile and compressive strength for use in building and/or construction applications. Said another way, the film component is a "humidity adaptive film." The humidity adaptive film as used herein means a film which has permeance of up to about 1.73 perms as determined according to the dessicant method of ASTM E 96 Method A at a mean RH percentage of 25, inclusive of up to 1.7, 1.6, 1.5, 1.3, 1.2, 1.1, 1.0, 0.5 and all values and ranges there between and a permeance of not less than about 3.45 perms, including not less than about 3.5, 3.7, 3.9, 4.0, 4.1 and all values and ranges there between as determined by the water method of ASTM E 96 Method B at a mean RH percentage of 75. In one embodiment, the humidity adaptive film has a permeance not lower than 0.6 as measured according to the dessicant method of ASTM E 96 Method A at a mean RH percentage of 25.

The humidity adaptiveness of the film component may also be expressed as a water vapor diffusion resistance (s_{d}-value) at a relative humidity of an atmosphere surrounding the vapor retarder in the region of 30% to 50% of 2 to 5 meters diffusion-equivalent air layer thickness, and, at a relative humidity in the region of 60% to 80% is < 1 meter diffusion-equivalent air layer thickness. The water vapor diffusion resistance of the film component can be determined in accordance with DIN 52615 in the dry range (3/50% relative humidity (RH)) and in the damp range (50/93% RH) as well as in damp ranges there between, for example 33/50% and 50/75% RH.

Any polymeric film can be used as the film component in the present invention, however, the film preferably meets the humidity adaptive criteria set forth above. Preferably the film is a polyamide film, and more preferably, the polyamide film is, for example, polyamide 6, polyamide 4 or polyamide 3. Further examples of suitable films include nylon films such as nylon 6 or nylon 6,6 films. Combinations of polymeric materials or films are also possible.

The thickness of the films will vary depending on the particular film chosen, however, the film can be from 10 µm to 2 mm, including 20 µm, 25 µm, 25.4 µm, 25.5 µm, 25.6 µm, 25.7 µm, 25.8 µm, 26 µm, 27 µm, 28 µm, 30 µm, 40 µm, 50 µm, 60 µm, 70 µm, 80 µm, 90 µm, 100 µm, 101.6 µm, 110 µm, 120 µm, 130 µm, 140 µm, 150 µm, 160 µm, 170 µm, 180 µm, 190 µm, 195 µm, 200 µm and all values and subranges there between, for example, 20 µm to 100 µm, 30 µm to 90 µm, 40 µm to 60 µm, 45.5 µm to 55.5 µm, etcetera.

In one embodiment of the present invention, the film component can be provided with a surface structure and/or printed pattern, such as color or grayscale print. As discussed above, the printed pattern can be provided during the manufacture of the laminated article, such as via an inkjet or flexographic printing device. Alternatively, the film can be preprinted before introduction into the manufacturing process of the present invention. Combinations of pre-printing and printing concurrent with the manufacturing process may also be utilized.

The building material onto which the film component is adhered during the manufacture of the laminated article can be any commonly used building material used. Preferably, however, the building material has a water vapor diffusion resistance which is less than the water vapor diffusion resistance of the film component.

Non-limiting examples of suitable building materials that can be employed in the manufacturing process of the present invention include fiber reinforced cellulose materials, such as paper webs, membranes made from synthetic fiber spun fabrics or perforated polyethylene films, particle board, chip board, oriented strand board, plywood paneling, gypsum board (standard or fiber reinforced), fiber board, cement board, cementitious wood wool board, calcium silica board, fiber insulation batts or slabs, foam insulation slabs, wall paper, carpet and woven and non-woven fabrics.

The film is adhered to at least one surface of the building material. For example, the film is adhered to at least one major or minor surface of the building material, preferably at least one major surface. As used herein, "major surface" refers to the surface or surfaces of the material which have a larger surface area than a second surface and likewise a "minor surface" has a smaller surface area than another surface of the material. In a preferred embodiment, at least one surface of the building material is not adhered to the film component. In an alternative embodiment, the film can sandwich the building material component such that a film is adhered to two opposite sides, major or minor, of the building material. The film can also be sandwiched between two layers of building material.

Any polyolefin based adhesive may be used provided it adheres the film to the building material and permits the film to maintain at least a part of its water vapor transmission properties as described herein. Preferably, the adhesive has a lower melting point than the film onto which the adhesive is applied to prevent the film from melting prior to its adhesion to the building material. For example, a polypropylene-based or polyethylene-based adhesive may be used. One example of such an adhesive is Henkel adhesive #80-8273 (Henkel Adhesives Elgin, IL). Water-based adhesives can also be used. Non-limiting examples of adhesives that can be used include Henkel 50-0965, 50-0965MHV, 50-0965, WB1961, 57-3027TT,and 56-7007UV water base adhesives from Henkel Corp., Elgin, IL ;

In one embodiment of providing the adhesive, the adhesive can be applied as a hotmelt which is sprayed onto the film, e.g., using elliptical and swirl spray devices. In another embodiment, the adhesive can be provided as chopped thermoplastic fibers, which are subsequently heated to a point sufficient where the fibers are able to adhere the film to the building material. In another embodiment, the adhesive can be provided as a non-woven thermoplastic veil which can also subsequently heated in a similar manner.

The adhesive can be applied to the film so that the permeance properties of the film component are not occluded or prevented from functioning properly. While there may be some reduction of the permeance, it is preferred that the film retains at least about 50% of the water-vapor transmission properties relative to the film prior to the adhesive being provided and maintains a minimum of 3.45 perms when tested by the water method of ASTM E 96 Method B at a mean RH percentage of 75 and a permeance of up to about 1.73 perms as determined according to the dessicant method of ASTM E 96 Method A at a mean RH percentage of 25. In alternative embodiments, the permeance of the film with adhesive retains at least about 60%, 70%, 80%, 90%, 95%, 97% and 99%, inclusive of all values and ranges there between.

To accomplish the two-fold requirement of adhering the film to the insulation and maintaining at least a part of the water-vapor transmission properties of the film can be accomplished by providing the adhesive in an amount of about 0.4 to about 1.5 grams (dry weight) per lineal 305 mm (foot) of the film based on a 381 mm (15 inch) application width. Further, the adhesive can be provided in an amount of about 0.5 to about 1.4 grams (dry weight) per lineal 305 mm (foot), inclusive of 0.6, 0.7, 0.8, 0.9, 1.0, 1.1, 1.2, and 1.3 grams per lineal 305 mm (foot) again based on a 381 mm (15 inch) application width.

The adhesive, when sprayed onto the film, can be provided substantially uniformly onto the film provided the above permeance and/or application criteria are maintained. In an alternative embodiment, the adhesive can be provided as shown in the embodiments in FIGS. 1B and 2B. In these embodiments, the thermoplastic hot melt adhesive 30 is applied to the film at the edges in a swirl pattern where at the center of the film, the adhesive 30 is applied in an elliptical pattern. Figure 2B shows the swirl pattern 30 is applied with a swirl gun 50 and the elliptical pattern is applied with an elliptical spray gun 51. Examples of suitable spray guns include those hot melt spray guns sold by Nordson® Corporation.

The thermoplastics fibers include, for example, thermoplastics comprising polypropylene, polyethylene or their mixtures. The fibers may be virgin or recycled. In this embodiment, the use of a small quantity of chopped fibers and the scattered distribution results in a light distribution onto the film thereby covering only a portion of the film which in turn permits the humidity adaptive aspect of the film component to function. For example, the fibers would cover approximately less than 20% of the surface of the film, including less than 19, 18, 17, 16, 15, 14, 13, 12, 11, 10 and all values and subranges there between.

The non-woven veil suitable for use in the present invention, is a low-melting point veil composed of thermoplastic fibers. Suitable fibers include polypropylene, polyethylene, polyamide and mixtures thereof. The fibers may be virgin or recycled. Once again, the application of the veil to the film component is provided such that the permeance and/or application criteria discussed above are maintained. Examples of suitable non-wovens for this purpose include, but are not limited to Spunfab POF 4913 polyolefin nonwoven, activation temperature 78°C (172°F) and Spunfab PA 1541 polyamide activation temperature 87°C (189°F) both 1.1 grams/sq.ft.

During the manufacturing process of the present invention or subsequent to the process, the laminated article can be cut into predetermined dimensions that would be preferable for storage, transport, sale, and end use (e.g., installation). If performed during the process, the cutting should preferably be after the film has adhered to the building material component. Further, it is also possible that certain building materials such as fiber insulation can be folded during or after the manufacturing process and would be preferably employed after the film has adhered to the building material component.

The laminated article can also be treated to reduce the static electricity, for example, by incorporating anti-static devices and/or anti-static treatments which are commonly used in the art. For example, a film with antistatic treatment that can be used is Honeywell Capran 200A.

In one embodiment, where the laminated article comprises an insulation batt or slab adhered to the film, the laminated article is packaged. Commonly, when insulation batts or slabs are packaged they are compressed. In this situation, in one aspect of the present invention, the laminated article is pushed through a snout, which is optionally coated with, for example, Teflon®, into a plastic bag.

The present invention also provides a laminated article. The laminated article is composed of at least one film component as described herein and at least one building material component with an adhesive between the at least one film component and the at least one building material where the adhesive is present in an amount of about 0.4 to about 1.5 grams (dry weight) per lineal 305 mm (foot) of the film based on a 381 mm (15 inch) application width. In further embodiments, the adhesive is present in an amount of about 0.5 to about 1.4 grams per lineal 305 mm (foot) inclusive of 0.6, 0.7, 0.8, 0.9, 1.0, 1.1, 1.2, and 1.3 grams per lineal foot again based on a 381 mm (15 inch) application width.

In an alternative embodiment, the laminated article is composed of at least one film component as described herein and at least one building material component with an adhesive between the at least one film component and the at least one building material where the adhesive is present in an amount such that at least 50% of the humidity adaptive properties relative to the film prior to the adhesive being provided and maintains a minimum of 3.45 perms when tested by the water method of ASTM E 96 Method B at a mean RH percentage of 75 and a permeance of up to about 1.73 perms as determined according to the dessicant method of ASTM E 96 Method A at a mean RH percentage of 25. In alternative embodiments, the permeance of the film with adhesive retains at least about 60%, 70%, 80%, 90%, 95%, 97% and 99%, inclusive of all values and ranges there between.

In another embodiment, the film provided to the building material retains at least 50% of its water vapor diffusion, permeance and/or transmission characteristics defined by permeance of up to about 1 perm as determined according to the dessicant method of ASTM E 96 Method A at a mean RH percentage of 25 and a permeance of not less than about 7 perms as determined by the water method of ASTM E 96 Method B at a mean RH percentage of 75.

The adhesive used for the laminated article of the present invention and the application thereof can also be chosen such that the adhesive is applied at the correct application which yields a laminated article having an ASTM E 84 maximum flame spread/smoke developed rating of 25/50 as determined by ASTM E 84 "Standard Test Method for Surface Burning Characteristics of Building Materials."

The adhesive used for the laminated article of the present invention and the application thereof can also be chosen such that the adhesive is applied at the application which yields a laminated article having no fungal growth in an ASTM C1338 Test "Standard Test Method for Determining Fungi Resistance of Insulation Materials and Facings" and ASTM G21 Test. " Standard Practice for Determining Resistance of Synthetic Polymeric Materials to Fungi."

Variations and other embodiments for the laminated article can be drawn from the description of the process provided above.

The laminated article described herein can be used to provide a vapor retarder to a building or portion of a building, e.g., a wall, roof or floor, or in any construction scenario where building materials, such as insulation are commonly employed. For example, the laminated article can be used, in addition to buildings, in transportation or moving vehicles, such as automobiles, planes, and trains, and particularly those designed for refrigeration. In addition, appliances such as refrigerators and/or freezers may also benefit from the use of the laminated article of the present invention. As used herein, "building" includes both commercial and residential buildings, such as office buildings, stores, houses and mobile homes. Thus, the laminated article of the present invention can be employed during the construction of a new building or renovation of an existing building. The laminated article would be provided to the appropriate location, e.g., between at least two studs of a wall or at least two rafters of a roof during the appropriate stage of the project. In a further embodiment, building components are commonly fabricated distant from the location of the actual location of the building (e.g., pre-fabricated building panels) and therefore, the laminated article can be employed during the manufacturing of those pre-fabricated building components and include, for example, a pre-fabricated wall, roof, or floor component.

### EXAMPLES

### Example 1

A roll of 2 mil nylon film is placed on an unwind stand in a pit underneath a fiberglass manufacturing line. Hot melt adhesive primarily composed of polypropylene is sprayed on the film at an application temperature of approximately 177°C (350°F). The film with the warm, tacky adhesive is then married to the bottom surface of a lane of mineral fiber insulation traveling above the nylon film on a conveyer line. The film with the adhesive is introduced to the mineral fiber insulation through a gap in the conveyer line. The film/mineral fiber laminate is further processed on the manufacturing line into batts or rolls and subsequently packaged.

### Example 2

0.0508 mm (0.002") thick nylon 6 films (blown extruded and cast extruded) that were laminated to fiber glass insulation with sprayed hot melt adhesive and then removed from the fiber glass were tested according to ASTM E 96 wet cup (water method) and dry cup (dessicant method) with different test chamber humidities at 23°C to achieve average 25%, 35%, 45%, 75%, 85%, and 95% relative humidity exposures and compared to unlaminated 0.0508 mm (0.002") thick nylon 6 film (blown and cast) with no hot melt adhesive applied.. The hot melt spray polypropylene adhesive was applied to the 2 mil nylon 6 film with a combination of elliptical and swirl spray guns. The film was laminated to fiber glass insulation and then removed from the fiber glass for water vapor transmission testing. 3% antistat was also included in the 2 mil nylon 6 film produced by blown film extrusion. There was no antistat in the 2 mil nylon film produced by cast film extrusion. The results are presented in the Table below.

| RESULTS OF ASTM E 96 Method B WET CUP TESTS (results are in perms) | | | | |
|---|---|---|---|---|
| Mean RH% | Laminated, Blown with 3% antistat | Unlaminated Blown with 3% antistat; no adhesive | Laminated, Cast without antistat | Unlaminated Cast without antistat; no adhesive |
| **75%** | 11.07 | 12.23 | 12.33 | 12.07 |
| **85%** | 16.57 | 20.53 | 17.40 | 18.23 |
| **95%** | 38.40 | 48.70 | 39.90 | 44.57 |

| RESULTS OF ASTM E 96 Method A DRY CUP TESTS (results are in perms) | | | | |
|---|---|---|---|---|
| Mean RH% | Laminated, Blown with 3% antistat | Unlaminated Blown with 3% antistat; no adhesive | Laminated, Cast without antistat | Unlaminated Cast without antistat; no adhesive |
| **25%** | 0.63 | 0.76 | 0.76 | 0.83 |
| **35%** | 0.96 | 1.10 | 1.09 | 1.30 |
| **45%** | 2.10 | 2.47 | 2.32 | 2.85 |

These data demonstrate that the laminated article retains significant levels of permeance relative to a product with no added adhesive.

### Example 3

**Testing was performed in accordance with ASTM F 1249-01,** *Standard Test Method for Water Vapor Transmission Rate Through Plastic Film and Sheeting Using a Modulated Infrared Sensor.* 0.0508 mm (0.002") thick nylon 6 cast extruded film with 3% anti-stat that was laminated to fiber glass insulation with sprayed hot melt adhesive and then removed from the fiber glass was tested according to ASTM F 1249-01. Also tested was 0.0508 mm (0.002") thick nylon 6 cast extruded film with 3% antistat that was not laminated and did not have hot melt adhesive applied. Tests were performed with the film exposed to average relative humidities of 20, 25, 40, and 50%. The temperature was maintained at 23°C (73.4°F) for all testing. The results were as follows.

| Sample | Laminated Cast with 3% antistat, and no adhesive | | Laminated Cast with 3% antistat, and spray hot melt adhesive | | | |
|---|---|---|---|---|---|---|
| Mean RH% | 25% | 50% | 20% | 25% | 40% | 50% |
| Water vapor Transmission Grams/(100m^{2*}day) Mean | 0.34 | 4.70 | 0.24 | 0.30 | 0.93 | 4.06 |

These data demonstrate that the laminated article retains significant levels of permeance relative to a product with no added adhesive.

The laminated articles were tested according to ASTM E 84 Standard Test Method for Surface Burning Characteristics of Materials resulting in a flame spread index of 15 and a smoke developed index of 5.

### Example 4

### Permeance testing using water-based adhesive

2.0 mil cast Nylon film was coated at a 50% surface coverage using Henkel 50-0965 MHV. The adhesive was applied at 0.9 g/ft² wet coating weight
Water vapor permeance by ASTM E96 Method A at 25% mean RH = 0.67 perms
Water vapor permeance by ASTM E96 Method B at 75% mean RH = 9.6 perms
2.0 mil cast Nylon film with 50% surface coverage using Henkel 57-3027T pressure sensitive adhesive applied 1.0 g/ft² wet coating weight
Water vapor permeance by ASTM E96 Method A at 25% mean RH = 0.71 perms
Water vapor permeance by ASTM E96 Method B at 75% mean RH = 8.0 perms

## Claims

1. A method of manufacturing a laminated article, comprising providing an adhesive to a water vapor retarder film having a water vapor permeance of up to about 1.73 perms as determined according to the desiccant method of ASTM E 96 Method A at a mean RH percentage of 25 and a permeance of not less than about 3.45 perms as determined by the water method of ASTM E 96 Method B at a mean RH percentage of 75, wherein the adhesive is provided in an amount of about 0.4 to about 1.5 grams (dry weight) per lineal 305 mm (foot) of the film based on a 381 mm (15 inch) application width; and contacting the film to at least one surface of a building material.

2. The method of Claim 1, wherein the building material is at least one member selected from the group consisting of fiber reinforced cellulose materials, membranes made from synthetic fiber spun fabrics, membranes made from perforated polyethylene films, particle board, chip board, oriented strand board, plywood paneling, gypsum board, fiber board, cement board, cementitious wood wool board, calcium silica board, fiber insulation batts, fiber insulation slabs, foam insulation slabs, wall paper, carpet, woven fabrics, and non-woven fabrics.

3. The method of Claim 1, wherein the film comprises a polyamide film.

4. The method of Claim 3, wherein the polyamide film is a polyamide 6 film, a polyamide 4 film, or a polyamide 3 film.

5. The method of Claim 1, wherein the adhesive comprises a polyolefin , polyamide, or is a water-based adhesive.

6. The method of Claim 5, wherein the adhesive comprises a polyolefin which is a polypropylene, a polyethylene or mixtures thereof.

7. The method of Claim 1, wherein the film has a thickness of from 10 µm to 2 mm.

8. The method of Claim 7, wherein the film has a thickness of from 20 µm to 100 µm.

9. The method of Claim 8, wherein the film has a thickness of from 30 µm to 90 µm.

10. The method of Claim 9, wherein the film has a thickness of from 40 µm to 60 µm.

11. A laminated article comprising at least one film component having a water vapor permeance of up to about 1.73 perms as determined according to the dessicant method of ASTM E 96 Method A at a mean RH percentage of 25 and a permeance of not less than about 3.45 perms as determined by the water method of ASTM E 96 Method B at a mean RH percentage of 75; at least one building material component; and an adhesive which adheres the at least one film component and the at least one building material wherein the adhesive is present in an amount of about 0.4 to about 1,5 grams (dry weight) per lineal 305 mm (foot) of the film based on a 381 mm (15 inch) application width.

12. The laminated article of Claim 11, wherein the building material is at least one member selected from the group consisting of fiber reinforced cellulose materials, membranes made from synthetic fiber spun fabrics, membranes made from perforated polyethylene films, particle board, chip board, oriented strand board, plywood paneling, gypsum board, fiber board, cement board, cementitious wood wool board, calcium silica board, fiber insulation batts, fiber insulation slabs, foam insulation slabs, wall paper, carpet, woven fabrics, and non-woven fabrics.

13. The laminated article of Claim 11, wherein the film comprises a polyamide film.

14. The laminated article of Claim 13, wherein the polyamide film is a polyamide 6 film, a polyamide 4 film, or a polyamide 3 film.

15. The laminated article of Claim 11, wherein the adhesive comprises a polyolefin, a polyamide, or a water base adhesive.

16. The laminated article of Claim 15, wherein the adhesive comprises a polyolefin which is a polypropylene, a polyethylene or mixtures thereof.

17. The laminated article of Claim 11, wherein the film has a thickness of from 10µm to 2mm.

18. The laminated article of Claim 17, wherein the film has a thickness of from 20µm to 100 µm.

19. The laminated article of Claim 18, wherein the film has a thickness of from 30µm to 90µm.

20. The laminated article of Claim 19, wherein the film has a thickness of from 40µm to 60 µm.

21. Use of the laminated article of Claim 11 for constructing a building comprising installing the laminated article to said building.

22. Use of the laminated article of Claim 11 for renovating a building comprising installing the laminated article to said building.

## Patentansprüche

1. Verfahren zur Herstellung eines laminierten Gegenstands, umfassend die Aufbringung eines Klebers auf eine Wasserdampfbremsfolie mit einer Wasserdampfdurchlässigkeit bis zu etwa 1,73 Perm gemäß Trockenmittel-Methode nach ASTM E 96 Methode A bei einer mittleren RH von 25 % und einer Permeanz von nicht weniger als etwa 3,45 Perm gemäß dem Wasserverfahren nach ASTM E 96 Methode B bei einer mittleren RH von 75 %, wobei das Klebemittel in einer Menge von etwa 0,4 bis etwa 1,5 Gramm (Trockengewicht) pro 305 mm (Fuß) Länge der Folie basierend auf einer Anwendungsbreite von 381 mm (15 Zoll) vorgesehen ist und Kontaktierung der Folie auf mindestens einer Fläche eines Baumaterials.

2. Verfahren nach Anspruch 1, in dem das Baumaterial mindestens ein Element ist, welches gewählt ist aus der Gruppe bestehend aus faserverstärkten Zellulosematerialien, Membranen aus synthetischen Spinnfasergeweben, Membranen aus perforierten Polyethylenfolien, Spanplatte, Chipplatte, Grobspanplatte, Sperrholzpanel, Gipsplatte, Faserplatte, Zementplatte, zementhaltige Holzwollplatte, Kalziumsilikatplatte, Faserisoliermatten, Faserisolierplatten, Dämmstoffschaumplatten, Tapete, Teppich, gewebte und nicht gewebte Erzeugnisse.

3. Verfahren nach Anspruch 1, in dem die Folie eine Polyamidfolie umfasst.

4. Verfahren nach Anspruch 3, in dem die Polyamidfolie eine Polyamid 6 Folie eine Polyamid 4 Folie oder eine Polyamid 3 Folie ist.

5. Verfahren nach Anspruch 1, in dem das Klebemittel Polyolefin, Polyamid oder einen wasserbasierten Kleber umfasst.

6. Verfahren nach Anspruch 5, in dem das Klebemittel ein Polyolefin umfasst, welches ein Polypropylen, ein Polyäthylen oder eine Mischung hiervon ist.

7. Verfahren nach Anspruch 1, in dem die Folie eine Dicke von 10 µm bis 2 mm aufweist.

8. Verfahren nach Anspruch 7, in dem die Folie eine Dicke von 20 µm bis 100 µm aufweist.

9. Verfahren nach Anspruch 8, **dadurch gekennzeichnet, dass** die Folie eine Dicke von 30 µm bis 90 µm aufweist.

10. Verfahren nach Anspruch 9, in dem die Folie eine Dicke von 40 µm bis 60 µm umfasst.

11. Laminierter Gegenstand umfassend mindestens eine Folienkomponente mit einer Wasserdampfdurchlässigkeit von bis zu etwa 1,73 Perm gemäß Trockenmittel-Methode nach ASTM E 96 Methode A bei einer mittleren RH von 25 % und einer Permeanz von nicht weniger als etwa 3,45 Perm gemäß dem Wasser-Verfahren nach ASTM E 96 Methode B bei einer mittleren RH von 75 %; wenigstens einem Baumaterialbestandteil und einem Kleber, welcher den wenigstens einen Folienbestandteil und das wenigstens eine Baumaterial verklebt, wobei der Kleber in einer Menge von etwa 0,4 bis 1,5 Gramm (Trockengewicht) pro 305 mm (Fuß) Länge der Folie vorliegt, basierend auf einer Anwendungsbreite von 381 mm (15 Zoll).

12. Laminierter Gegenstand nach Anspruch 11, in dem das Baumaterial wenigstens ein Element ist, welches gewählt ist, aus der Gruppe bestehend aus faserverstärkten Zellulosematerialien, Membranen aus synthetischen Spinnfasergeweben, Membranen aus perforierten Polyethylenfolien, Spanplatte, Chipplatte, Grobspanplatte, Sperrholzpanel, Gipsplatte, Faserplatte, Zementplatte, zementhaltige Holzwollplatte, Kalziumsilikatplatte, Faserisoliermatten, Faserisolierplatten, Dämmstoffschaumplatten, Tapete, Teppich, gewebte und nicht gewebte Erzeugnisse.

13. Laminierter Gegenstand nach Anspruch 11, in dem die Folie eine Polyamidfolie umfasst.

14. Laminierter Gegenstand nach Anspruch 13, in dem die Polyamidfolie eine Polyamid-6-Folie, eine Polyamid-4-Folie oder eine Polyamid-3-Folie ist.

15. Laminierter Gegenstand nach Anspruch 11, in dem der Kleber ein Polyolefin, ein Polyamid, oder einen wasserbasierenden Kleber umfasst.

16. Laminierter Gegenstand nach Anspruch 15, in dem der Kleber ein Polyolefin umfasst, welches ein Polypropylen, ein Polyethylen oder eine Mischung daraus ist.

17. Laminierter Gegenstand nach Anspruch 11, in dem die Folie eine Dicke von 10µm bis 2mm hat.

18. Laminierter Gegenstand nach Anspruch 17, in dem die Folie eine Dicke von 20 µm bis 100 µm hat.

19. Laminierter Gegenstand nach Anspruch 18, wobei die Folie eine Dicke von 30 µm bis 90 µm hat.

20. Laminierter Gegenstand nach Anspruch 19, wobei die Folie eine Dicke von 40 µm bis 60 µm hat.

21. Verwendung des laminierten Gegenstands nach Anspruch 11 zur Errichtung eines Gebäudes umfassend die Anbringung des laminierten Gegenstands an das Gebäude.

22. Verwendung des laminierten Gegenstands nach Anspruch 11 zur Renovierung eines Gebäudes umfassend die Anbringung des laminierten Gegenstands an das Gebäude.

## Revendications

1. Procédé de fabrication d'un article stratifié, comprenant la mise en place d'un adhésif sur un film de retardateur de vapeur d'eau ayant une perméance à la vapeur d'eau de jusqu'à environ 1,73 perms telle que déterminée selon la méthode au dessicatif d'ASTM E 96 Méthode A à un pourcentage d'HR moyen de 25 et une perméance supérieure ou égale à environ 3,45 perms telle que déterminée par la méthode à l'eau d'ASTM E 96 Méthode B à un pourcentage d'HR moyen de 75, l'adhésif étant mis en place en une quantité d'environ 0,4 à environ 1,5 gramme (poids sec) pour 305 mm (pieds) linéaires du film pour une largeur d'application de 381 mm (15 pouces) ; et
la mise en contact du film avec au moins une surface d'un matériau de construction.

2. Procédé selon la revendication 1, dans lequel le matériau de construction est au moins un élément choisi dans le groupe constitué par les matériaux cellulosiques renforcés par des fibres, les membranes fabriquées à partir de tissus filés à partir de fibres synthétiques, les membranes fabriquées à partir de films de polyéthylène perforés, les panneaux de particules, les panneaux de copeaux, les panneaux de particules orientées, les panneaux de contreplaqué, les panneaux de gypse, les panneaux de fibres, les panneaux de ciment, les panneaux de laine de bois cimentaire, les panneaux de silice de calcium, les plaques d'isolation en fibres, les dalles d'isolation en fibres, les dalles d'isolation en mousse, les papiers peints, les moquettes, les tissus tissés et les tissus non tissés.

3. Procédé selon la revendication 1, dans lequel le film comprend un film de polyamide.

4. Procédé selon la revendication 3, dans lequel le film de polyamide est un film de polyamide 6, un film de polyamide 4 ou un film de polyamide 3.

5. Procédé selon la revendication 1, dans lequel l'adhésif comprend une polyoléfine, un polyamide ou est un adhésif à base d'eau.

6. Procédé selon la revendication 5, dans lequel l'adhésif comprend une polyoléfine qui est un polypropylène, un polyéthylène ou un mélange de ceux-ci.

7. Procédé selon la revendication 1, dans lequel le film a une épaisseur de 10 µm à 2 mm.

8. Procédé selon la revendication 7, dans lequel le film a une épaisseur de 20 µm à 100 µm.

9. Procédé selon la revendication 8, dans lequel le film a une épaisseur de 30 µm à 90 µm.

10. Procédé selon la revendication 9, dans lequel le film a une épaisseur de 40 µm à 60 µm.

11. Article stratifié comprenant au moins un composant film ayant une perméance à la vapeur d'eau de jusqu'à environ 1,73 perms telle que déterminée selon la méthode au dessicatif d'ASTM E 96 Méthode A à un pourcentage d'HR moyen de 25 et une perméance supérieure ou égale à environ 3,45 perms telle que déterminée par la méthode à l'eau d'ASTM E 96 Méthode B à un pourcentage d'HR moyen de 75 ; au moins un composant matériau de construction ; et un adhésif qui fait adhérer le ou les composants films et le ou les matériaux de construction, l'adhésif étant présent en une quantité d'environ 0,4 à environ 1,5 gramme (poids sec) pour 305 mm (pieds) linéaires du film pour une largeur d'application de 381 mm (15 pouces).

12. Article stratifié selon la revendication 11, dans lequel le matériau de construction est au moins un élément choisi dans le groupe constitué par les matériaux cellulosiques renforcés par des fibres, les membranes fabriquées à partir de tissus filés à partir de fibres synthétiques, les membranes fabriquées à partir de films de polyéthylène perforés, les panneaux de particules, les panneaux de copeaux, les panneaux de particules orientées, les panneaux de contreplaqué, les panneaux de gypse, les panneaux de fibres, les panneaux de ciment, les panneaux de laine de bois cimentaire, les panneaux de silice de calcium, les plaques d'isolation en fibres, les dalles d'isolation en fibres, les dalles d'isolation en mousse, les papiers peints, les moquettes, les tissus tissés et les tissus non tissés.

13. Article stratifié selon la revendication 11, dans lequel le film comprend un film de polyamide.

14. Article stratifié selon la revendication 13, dans lequel le film de polyamide est un film de polyamide 6, un film de polyamide 4 ou un film de polyamide 3.

15. Article stratifié selon la revendication 11, dans lequel l'adhésif comprend une polyoléfine, un polyamide ou est un adhésif à base d'eau.

16. Article stratifié selon la revendication 15, dans lequel l'adhésif comprend une polyoléfine qui est un polypropylène, un polyéthylène ou un mélange de ceux-ci.

17. Article stratifié selon la revendication 11, dans lequel le film a une épaisseur de 10 µm à 2 mm.

18. Article stratifié selon la revendication 17, dans lequel le film a une épaisseur de 20 µm à 100 µm.

19. Article stratifié selon la revendication 18, dans lequel le film a une épaisseur de 30 µm à 90 µm.

20. Article stratifié selon la revendication 19, dans lequel le film a une épaisseur de 40 µm à 60 µm.

21. Utilisation de l'article stratifié selon la revendication 11 pour la construction d'un bâtiment comprenant l'installation de l'article stratifié dans ledit bâtiment.

22. Utilisation de l'article stratifié selon la revendication 11 pour la rénovation d'un bâtiment comprenant l'installation de l'article stratifié dans ledit bâtiment.
